Europäisches Patentamt

European Patent Office

Office européen des brevets

(19)

(11) **EP 1 198 936 B1**

(12) **EUROPÄISCHE PATENTSCHRIFT**

(45) Veröffentlichungstag und Bekanntmachung des Hinweises auf die Patenterteilung:
**26.05.2004 Patentblatt 2004/22**

(21) Anmeldenummer: **00962167.3**

(22) Anmeldetag: **28.07.2000**

(51) Int Cl.$^7$: **H04L 25/02**

(86) Internationale Anmeldenummer:
**PCT/DE2000/002503**

(87) Internationale Veröffentlichungsnummer:
**WO 2001/010093 (08.02.2001 Gazette 2001/06)**

(54) **VERFAHREN ZUR ADAPTIVEN SCHÄTZUNG DER KANALIMPULSANTWORTEN EINES MOBILFUNKKANALS**

METHOD FOR ADAPTIVE ESTIMATION OF CHANNEL IMPULSE RESPONSES OF A WIRELESS TELEPHONE CHANNEL

PROCEDE D'ESTIMATION ADAPTATIVES DES REPONSES IMPULSIONNELLES D'UN CANAL DE TELEPHONIE MOBILE

(84) Benannte Vertragsstaaten:
**AT BE CH CY DE DK ES FI FR GB GR IE IT LI LU MC NL PT SE**

(30) Priorität: **28.07.1999 DE 19935480**

(43) Veröffentlichungstag der Anmeldung:
**24.04.2002 Patentblatt 2002/17**

(73) Patentinhaber: **Infineon Technologies AG
81669 München (DE)**

(72) Erfinder:
• **JUNG, Peter
D-67697 Otterberg (DE)**
• **SCHNEIDER, Michael
D-81541 München (DE)**
• **KELLA, Tideya
D-80337 München (DE)**
• **DOETSCH, Markus
D-81539 München (DE)**
• **PLECHINGER, Jörg
D-80469 München (DE)**
• **SCHMIDT, Peter
D-67167 Erpolzheim (DE)**

(74) Vertreter: **Lange, Thomas, Dr. et al
Patentanwälte
Lambsdorff & Lange
Dingolfinger Strasse 6
81673 München (DE)**

(56) Entgegenhaltungen:
**WO-A-99/20061         DE-A- 19 747 457
US-A- 5 465 276         US-A- 5 619 524
US-A- 5 818 876         US-A- 5 862 192
US-A- 5 909 447**

**Beschreibung**

Die Erfindung betrifft ein Verfahren zur Schätzung der Kanalimpulsantwort eines Mobilfunkkanals nach dem Oberbegriff von Patentanspruch 1.

Um bei Mobilfunksystemen eine gute Übertragungsqualität zu erreichen, ist die Kenntnis der Kanalimpulsantwort eines Mobilfunkkanals von besonderer Bedeutung. Erst dadurch kann ein über den Mobilfunkkanal übertragenes Signal in einem Empfänger für eine anschließende Auswertung ausreichend entzerrt werden. Je genauer dabei die Kanalimpulsantwort des Mobilfunkkanals dem Empfänger bekannt sind, desto besser kann ein empfangenes Signal entzerrt und ausgewertet werden.

Die Schätzung der Kanalimpulsantwort eines Mobilfunkkanals bei CDMA-Mobilfunksystemen (Code Division Multiple Access) erfolgt üblicherweise durch eine Schätzung der Verzögerungszeit und einer anschließenden Schätzung der komplexen Amplitude bzw. Amplitude und Phase eines Signals, das über den Mobilfunkkanal übertragen wird. Da Mobilfunkkanäle zeitvariant sind, müssen sowohl die Verzögerungszeit als auch die komplexe Amplitude, beziehungsweise Amplitude und Phase, laufend von einem Empfänger geschätzt werden. Dies geschieht im Empfänger üblicherweise entweder durch eine iterative Nachstellung (Tracking) auf das Signal oder durch Mittelung des Signals.

In dem CDMA-Mobilfunksystem der dritten Generation UMTS (Universal Telecommunication System) werden dazu Pilotsymbole verwendet, die an festgelegten, dem Empfänger bekannten Stellen innerhalb eines Slots oder Zeitschlitzes, zum Beispiel am Anfang, der einem Mobilfunkteilnehmer zum Empfangen von Signalen zur Verfügung steht, übertragen werden. Die Pilotsymbole werden dabei über einen Synchronisationskanal, der ein Downlink-Kanal ist, übertragen.

Die Schätzung der Kanalimpulsantwort erfolgt allerdings erst, nachdem eine Akquisition des Synchronisationskanals im Mobilfunkempfänger abgeschlossen ist. Zudem ist die zweischrittige Schätzung der Kanalimpulsantwort - Schätzung der Verzögerung, dann erst Schätzung der Gewichtsfaktoren - nicht optimal, da der Mobilfunkkanal zeitvariant ist und insbesondere bei einer hohen Geschwindigkeit des Mobilfunkempfängers laufend seine Eigenschaften ändert, wodurch ungenaue Schätzergebnisse erzielt werden.

In dem Buch "Wideband CDMA for Third Generation Mobile Communications", von T. Ojanperä et al., Artech House Publishers, Boston, 1998, ist in dem Kapitel 6.3.3.2 auf den Seiten 171 bis 173 die Verwendung eines gemeinsamen Synchronisationskanals zur Synchronisation einer Vielzahl von Mobilfunkempfängern mit einer Basisstation beschrieben. Die Kanalschätzung erfolgt über Pilotsymbole, welche in einem dedizierten Kanal oder einem gemeinsamen Steuerkanal BCCH übertragen werden.

In der Schrift U.S. 5,619,524 ist ein Verfahren zur Kanalschätzung beschrieben, bei welchem Pilotsymbole sowohl zur Kanalschätzung als auch zur Zeitsynchronisation verwendet werden. Die Pilotsymbole werden über einen dedizierten Kanal im Uplink-Betrieb von der Mobilstation zu einer Basisstation übertragen.

In der Schrift U.S. 5,818,876 ist ein Verfahren zur Kanalschätzung beschrieben, bei welchem Pilotsymbole sowohl zur Zeitsynchronisation als auch zur Kanalschätzung in einem Kommunikationssystem eingesetzt werden.

Der Erfindung liegt daher die Aufgabe zugrunde, ein Verfahren zur Schätzung der Kanalimpulsantwort eines Mobilfunkkanals zu schaffen, bei dem die eingangs geschilderten Nachteile vermieden werden.

Diese Aufgabe wird durch ein Verfahren mit den Merkmalen des Patentanspruchs 1 gelöst. Vorteilhafte Ausgestaltungen des Verfahren sind Gegenstand der abhängigen Patentansprüche.

Die Erfindung betrifft ein Verfahren zur Schätzung der Kanalimpulsantworten eines Downlink Mobilfunkkanals, im weiteren als Mobilfunkkanalimpulsantworten bezeichnet, in einem CDMA-System, welches einen gemeinsamen, zur Synchronisation jedes Mobilfunkempfängers vorgesehen Synchronisationskanal aufweist, über den fortlaufend Sequenzen an eine Vielzahl von Mobilfunkempfängern übertragen werden, die jedem der Vielzahl von Mobilfunkempfängern a-priori bekannt sind, wobei die übertragenen Sequenzen Pilotsymbole zum Erkennen des Synchronisationskanals aufweisen und die Pilotsymbole an dem Empfänger bekannten Stellen innerhalb eines Slots oder Zeitschlitzes übertragen werden. Erfindungsgemäß werden beim Suchen und Erkennen des Synchronisationskanals durch Auswerten der den Mobilfunkempfängern bekannten Pilotsymbole sowie gegebenenfalls weiterer im Empfänger bekannten Symbole und Sequenzen die Verzögerungszeiten und die komplexen Amplituden, d.h. Amplituden und Phasen, der Mobilfunkkanalimpulsantworten geschätzt.

Vorteilhafterweise werden durch diese kombinierte Schätzung der Mobilfunkkanalimpulsantwort die Ergebnisse der Schätzung gegenüber einem mehrstufigen sequentiellen Schätzverfahren deutlich verbessert.

Vorzugsweise werden die Pilotsymbole sowie gegebenenfalls weitere im Empfänger beispielsweise durch Vorabentscheidung bekannte Symbole und Sequenzen beim Suchen und Erkennen des Synchronisationskanals während einer Slot-Synchronisation ausgewertet. Insbesondere werden zweite Sequenzen, die über einen zweiten Synchronisationskanal übertragen werden, zusätzlich zur Schätzung der Verzögerungszeit und der Gewichtsfaktoren der Übertragungsfunktion des Mobilfunkkanals benutzt.

In einer bevorzugten Ausführungsform des Verfahrens werden jeweils beim Empfangen eines Pilotsymbols am Anfang eines Zeitschlitzes die Mobilfunkkanalimpulsantwort geschätzt. Diese Ausführungsform wird vorteilhafterweise bei niedrigen Geschwindigkeiten eines Mobilfunkempfängers bis etwa 100 km/h eingesetzt.

Bei höheren Geschwindigkeiten des Mobilfunkempfängers ändern sich die Mobilfunkkanalimpulsantworten so schnell, daß ihre einmalige Schätzung pro Slot bzw. Zeitschlitz nicht ausreicht. Deshalb werden die Mobilfunkkanalimpulsantwort vorzugsweise durch lineare Interpolation oder Prädiktion, beispielsweise basierend auf den Schätzungen der Mobilfunkkanalimpulsantworten, die aufgrund von Pilotsymbolen jeweils einmalig pro Slot bzw. Zeitschlitz gewonnen werden, mehrfach innerhalb eines aktuellen Zeitschlitzes geschätzt. Bei Datenraten bis 64 kbit/s sowie einem Spreizfaktor von 32 und größer eignet sich diese Ausführungsform insbesondere zur genauen Schätzung der Mobilfunkkanalimpulsantworten. Ferner können die Daten- und Kontrollinformationen, die zwischen dem Pilotsymbol des vorhergehenden Zeitschlitzes und dem Pilotsymbol des aktuellen Zeitschlitzes übertragen werden, zwischengespeichert werden.

Steigt die Datenrate bei höheren Geschwindigkeiten, so werden vorzugsweise die Mobilfunkkanalimpulsantworten durch Prädiktion, basierend auf den in den beiden dem aktuellen Slot bzw. Zeitschlitz vorangegangenen Slots bzw. Zeitschlitz gewonnen wurden, geschätzt. Diese Ausführungsform ist rechenintensiv.

Vorzugsweise wird zur Entscheidung über den Einsatz eines der vorhergehenden Verfahren ein programmierbares oder adaptiv regelbares Schwellwertkriterium benutzt.

Ferner wird die Anzahl der Abtastwerte zur Schätzung der Mobilfunkkanalimpulsantworten abhängig von der zu erzielenden Genauigkeit der Schätzung programmiert. Bei einem hohen Spreizfaktor eines empfangenen Signals ist es nämlich nicht erforderlich, alle Abtastwerte des Signals.für die Schätzung der Mobilfunkkanalimpulsantworten zu berücksichtigen, wodurch sich der Rechenaufwand zur Durchführung des Verfahrens verringert.

Weitere Vorteile und Anwendungsmöglichkeiten ergeben sich aus der nachfolgenden Beschreibung eines Ausführungsbeispiels in Verbindung mit den Zeichnungen. In den Zeichnungen zeigt

Figur 1 die Struktur der zur Synchronisation vorgesehenen Kanäle bei einem UMTS-Mobilfunksystem, und

Figur 2 die Rahmenstruktur des Dedicated Physical Channel (DPC) bei einem UMTS-Mobilfunksystem.

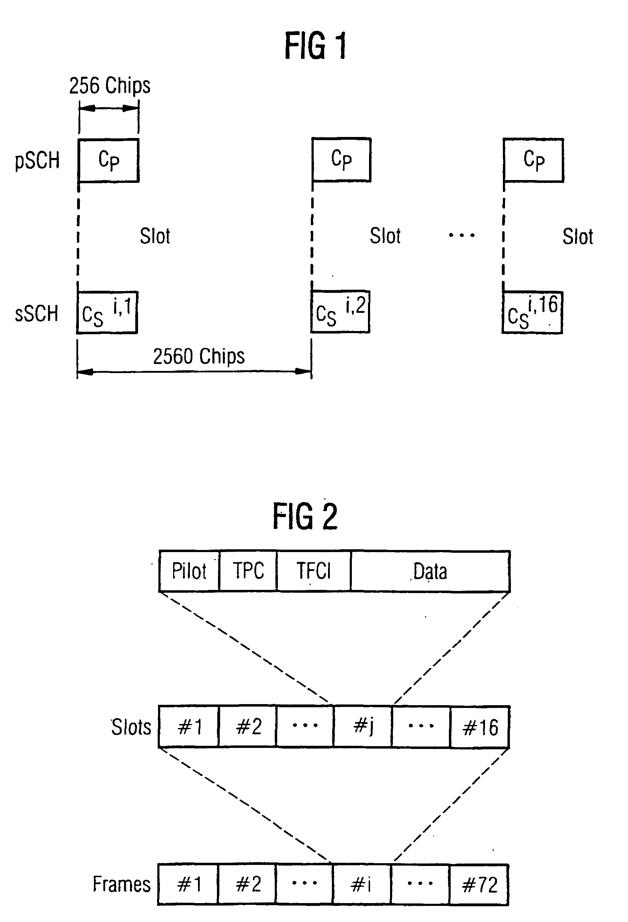

In Figur 1 ist die Struktur der zur Synchronisation vorgesehenen Kanäle bei dem UMTS-Mobilfunksystem der dritten Generation dargestellt.

Ein erster Synchronisationskanal pSCH (primary Synchronisation Channel) und ein zweiter Synchronisationskanal sSCH (secondary Synchronisation Channel) weisen jeweils erste Synchronisationskodes bzw. zweite Synchronisationskodes innerhalb eines Slots bzw. Zeitschlitzes auf. Insgesamt werden in einem Slot 2560 Chips übertragen, wovon die ersten 256 Chips für den ersten bzw. zweiten Synchronisationskode genutzt werden. Im ersten Synchronisationskanal werden zu Beginn eines Slots immer gleiche erste Synchronisationskodes $c_p$ (primary Synchronisation Codes) übertragen. Im zweiten Synchronisationskanal werden dagegen zu Beginn jedes Slots verschiedene zweite Synchronisationskodes $c_s^{i,k}$ übertragen. Es sind dabei insgesamt 17 mögliche zweite Synchronisationkodes $c_s^{i,k}$ vorgesehen.

Im folgenden werden grob die Schritte, die beim "Einbuchen" in ein UMTS-Mobilfunksystem von einem Mobilfunkempfänger durchgeführt werden, beschrieben.

In einem ersten Schritt sucht der Mobilfunkempfänger zum Einbuchen in das Mobilfunksystem nach dem ersten Synchronisationskanal pSCH (primary Synchronisation Channel), um eine Slot-Synchronisation durchzuführen. Die Slot-Synchronisation dient zur zeitgenauen Synchronisation des Mobilfunkempfängers. Dazu ist im Mobilfunkempfänger ein Filter, das an den Synchronisationskode des ersten Synchronisationskanals angepaßt ist, vorgesehen. Der erste Synchronisationskode ist dabei für alle Funkzellen des Mobilfunksystems gleich, so daß eine einfache Ausführung des Filters zum Erkennen bzw. "Herausfiltern" des Synchronisationskodes aus allen empfangenen Signalen ausreicht.

Nach einer zeitgenauen Synchronisation auf die Slots erfolgt in einem zweiten Schritt eine Synchronisation auf die Rahmen (Frames). Ein Rahmen des ersten und zweiten Synchronisationskanals besteht bei UMTS aus sechzehn Slots. Anhand des zweiten Synchronisationskanals sSCH (secondary Synchronisation Channel), dessen Lage dem Mobilfunkempfänger aufgrund der Synchronisation im ersten Schritt bekannt ist, wird nun eine Kode-Gruppe, der die Funkzelle angehört, ermittelt. Dazu wird das empfangene Signal an den Positionen des zweiten Synchronisationskodes, die nach der zeitgenauen Synchronisation im ersten Schritt bekannt sind, mit allen möglichen zweiten Synchronisationskodes $c_s^{i,k}$ korreliert. Aus den Korrelationen werden Entscheidungsvariablen abgeleitet, die zur Ermittlung der Kode-Gruppe der Funkzelle dienen. Dadurch ist der Empfänger gleichzeitig auf die Rahmenstruktur des Synchronisationskanals synchronisiert.

In einem dritten und letzten Schritt wird der genaue erste Spreizkode (Primary Scrambling Code), der von der erkannten Funkzelle verwendet wird, ermittelt. Das Korrelationsmaximum entspricht dann dem genauen ersten Spreizkode.

In Figur 2 ist Rahmenstruktur eines Downlink Dedicated Physical Channel (Downlink DPCH) dargestellt. Der DPC weist 72 Rahmen (Frames) auf, die jeweils sechzehn Slots bzw. Zeitschlitze aufweisen. Jeder Slot beginnt mit einem Pilotsymbol, gefolgt von einem TPC- und einem TFCI-Symbol sowie den Datenbits. Die TPC- und TFCI-Symbole enthalten Kontrollinformationen für den Empfänger. Jeder Rahmen dauert 10 ms und jeder Slot 0,625 ms.

Zur Schätzung der Kanalimpulsantwort stehen drei verschiedene Verfahren zur Verfügung:

1. Schätzung durch Pilot-Integration;

2. Schätzung durch Pilot-Integration und Prädiktion bzw. Interpolation durch Auswertung des Pilotsymbols des aktuellen und vorhergehenden Slots; und

3. Schätzung durch Pilot-Integration und Prädiktion bzw. Interpolation durch Auswertung der Pilotsymbole der beiden vorhergehenden Slots.

Die Schätzung wird vorzugsweise durch einen Signalprozessor ausgeführt.

Bei der Schätzung durch Pilot-Integration werden die Mobilfunkkanalimpulsantworten während des Empfangs eines Pilotsymbols eines Slots geschätzt. Da das gesendete Pilotsymbol dem Empfänger bekannt ist, kann eine einfache Schätzung der Mobilfunkkanalimpulsantworten anhand des empfangenen Pilotsymbols durchgeführt werden. Dieses Verfahren ist insbesondere bei Geschwindigkeiten bis zu etwa 100 km/h des Empfängers anwendbar.

Das zweite Verfahren wird bei Datenraten bis zu 64 kbit/s und hohen Geschwindigkeiten sowie bei Spreizfaktoren größer gleich 32 angewandt. In einem solchen Fall ändern sich die Mobilfunkkanalimpulsantworten sehr schnell, wodurch eine Schätzung der Mobilfunkkanalimpulsantworten mit den empfangenew Pilotsymbolen am Beginn eines Slots bereits am Ende des Slots oder bei sehr hohen Geschwindigkeiten des Empfängers auch schon vor dem Ende des Slots sehr ungenau ist und den tatsächlichen Kanaleigenschaften nicht mehr entspricht. Deshalb ist eine Verfolgung der Änderung der Mobilfunkkanalimpulsantworten zwischen zwei aufeinanderfolgenden Pilotsymbolfolgen erforderlich. Die Daten- und Kontrollinformationen zwischen den zwei aufeinanderfolgenden Pilotsymbolfolgen werden dabei aufgrund der durch Interpolation zwischen den beiden Pilotsignalfolgen geschätzten Mobilfunkkanalantworten ermittelt. Allerdings ist hierfür eine Pufferung der Daten- und Kontrollinformationen eines Slots nötig. Die Formel zur Ermittlung der Mobilfunkkanalimpulsantworten lautet:

$$h(n) = h(0) + \frac{h(N_s)\text{-}h(0)}{N_s} \cdot n$$

Die Mobilfunkkanalimpulsantworten h zum Zeitpunkt n werden dabei durch Interpolation der Mobilfunkkanalimpulsantworten zum Zeitpunkt 0 und zum Zeitpunkt $N_s$ am Ende des Slots ermittelt. Der Zeitpunkt $N_s$ entspricht der Gesamtanzahl der Symbole des Slots.

Für sehr hohe Geschwindigkeiten und eine hohe Datenrate eignet sich das dritte Verfahren. In einem solchen Fall unterscheidet sich die aktuellen Mobilfunkkanalimpulsantworten immer von den am Anfang eines Slots mittels der Pilot-Integration geschätzten Mobilfunkkanalimpulsantworten. Deshalb erfolgt eine Schätzung durch Pilot-Integration und Interpolation durch Auswertung der Pilotsymbole der beiden vorhergehenden Slots. Die Formel zur Ermittlung der Kanalimpulsantwort lautet in diesem Fall:

$$h(n) = h(N_s) + \frac{h(N_s)\text{-}h(0)}{N_s} \cdot n$$

Hier ist keine Pufferung der Daten- und Kontrollinformation eines Slots erforderlich, da zur Interpolation die Pilotsymbole der beiden vorhergehenden Slots benutzt werden.

## Patentansprüche

**1.** Verfahren zur Schätzung der Mobilfunkkanalimpulsantworten eines Downlink-Mobilfunkkanals in einem CDMA-System, welches einen gemeinsamen, zur Synchronisation jedes Mobilfunkempfängers vorgesehenen Synchronisationskanal aufweist, über den fortlaufend Sequenzen an eine Vielzahl von Mobilfunk-empfängern übertragen werden, die jedem der Vielzahl von Mobilfunkempfängern bekannt sind, wobei die übertragenen Sequenzen Pilotsymbole zum Erkennen des Synchronisationskanals aufweisen und die Pilotsymbole an den Empfängern bekannten Stellen innerhalb eines Zeitschlitzes übertragen werden,
**dadurch gekennzeichnet, daß**
beim Suchen und Erkennen des Synchronisationskanals durch Auswerten der den Mobilfunkempfängern bekannten Pilotsymbole der Sequenzen sowie ggf. weiterer in den Empfängern durch Vorentscheidungen bekannter Symbole und Sequenzen die Verzögerungszeiten und die komplexen Amplituden der Mobilfunk-kanalantworten gemeinsam geschätzt werden.

**2.** Verfahren nach Anspruch 1, **dadurch gekennzeichnet, daß** beim Suchen und Erkennen des Synchronisationskanals während einer Slot-Synchronisation die Pilotsymbole ausgewertet werden.

**3.** Verfahren nach Anspruch 1 oder 2, **dadurch gekennzeichnet, daß** zweite Sequenzen, die über einen zweiten Synchronisationskanal übertragen werden, zusätzlich zur Schätzung der Verzögerungszeiten und der komplexen Amplituden, bzw. Amplituden und Phasen, der Mobilfunkkanalantworten benutzt werden.

4. Verfahren nach einem der vorhergehenden Ansprüche, **dadurch gekennzeichnet, daß** jeweils beim Empfangen eines Pilotsymbols bzw. einer Pilotsymbolfolge am Anfang oder am Ende eines Zeitschlitzes oder einer anderen beliebigen Lage im Zeitschlitz die Mobilfunkkanalimpulsantworten geschätzt werden.

5. Verfahren nach einem der Ansprüche 1 bis 3, **dadurch gekennzeichnet, daß** die Mobilfunkkanalimpulsantworten durch Prädiktion oder Interpolation eines in einem vorhergehenden Zeitschlitz empfangenen Pilotsymbols oder Pilotsymbolfolge und eines Pilotsymbols bzw. einer Pilotsymbolfolge eines aktuellen Zeitschlitzes geschätzt werden.

6. Verfahren nach Anspruch 5, **dadurch gekennzeichnet, daß** bei der Prädiktion bzw. der Interpolation weitere im Empfänger beispielsweise durch Vorentscheidung bekannte Symbole verwendet werden.

7. Verfahren nach Anspruch 5 oder 6, **dadurch gekennzeichnet, daß** Daten- und Kontrollinformationen, die zwischen dem letzten Pilotsymbol des vorhergehenden Zeitschlitzes und dem ersten Pilotsymbol des aktuellen Zeitschlitzes übertragen werden, zwischengespeichert werden.

8. Verfahren nach einem der Ansprüche 1 bis 3, **dadurch gekennzeichnet, daß** die Mobilfunkkanalimpulsantworten durch lineare oder nichtlineare Prädiktion von Pilotsymbolen der beiden dem aktuellen Zeitschlitz vorhergehenden Zeitschlitze geschätzt wird.

9. Verfahren zur Entscheidung über den Einsatz eines der Verfahren nach Anspruch 1, 5 oder 8, wobei ein programmierbares oder adaptiv regelbares Schwellwertkriterium zur Entscheidung verwendet wird.

10. Verfahren nach einem der Ansprüche 1 bis 8, **dadurch gekennzeichnet, daß** die Anzahl der Abtastwerte zur Schätzung der Verzögerungszeiten und der komplexen Amplituden, bzw. Amplituden und Phasen, abhängig von der zu erzielenden Genauigkeit der Schätzung programmiert wird.

11. Vefahren nach Anspruch 2, **dadurch gekennzeichnet, daß** der Synchronisationskanal zur Slot-Synchronisation der pSCH-Kanal im UMTS Mobilfunkstandard ist.

12. Vefahren nach Anspruch 3, **dadurch gekennzeichnet, daß** der zweite Synchronisationskanal der sSCH-Kanal im UMTS Mobilfunkstandard ist.

## Claims

1. Method for estimating the mobile radio channel impulse responses in a downlink mobile radio channel in a CDMA system which has a common synchronization channel provided for synchronization of each mobile radio receiver, via which sequences are transmitted continuously to a large number of mobile receivers which are known to each of a large number of mobile radio receivers, with the transmitted sequences having pilot symbols for identifying the synchronization channel, and the pilot symbols being transmitted at points which are known to the receivers within a time slot,
**characterized in that**
when searching for and identifying the synchronization channel, the pilot symbols in the sequences, which are known to the mobile radio receivers, and, possibly, further symbols and sequences which are known in the receivers as a result of prior decisions are evaluated in order to jointly estimate the delay times and the complex amplitudes, of the mobile radio channel responses.

2. Method according to Claim 1, **characterized in that** the pilot symbols are evaluated while searching for and identifying the synchronization channel during slot synchronization.

3. Method according to Claim 1 or 2, **characterized in that** second sequences, which are transmitted via a second synchronization channel, are additionally used for estimating the delay times and the complex amplitudes, or amplitudes and phases, of the mobile radio channel responses.

4. Method according to one of the preceding claims, **characterized in that**, the mobile radio channel impulse responses are in each case estimated on receiving a pilot symbol or a pilot symbol sequence at the start or at the end of a time slot, or at any other position in the time slot.

5. Method according to one of Claims 1 to 3, **characterized in that** the mobile radio channel impulse responses are estimated by prediction or interpolation of a pilot symbol or pilot symbol sequence received in a previous time slot, and of a pilot symbol or pilot symbol sequence in a current time slot.

6. Method according to Claim 5, **characterized in that** further symbols, which are known in the receiver for example as a result of a prior decision, are used for the prediction or the interpolation.

**7.** Method according to Claim 5 or 6, **characterized in that** data and monitoring information, which is transmitted between the last pilot symbol in the previous time slot and the first pilot symbol in the current time slot, is buffer-stored.

**8.** Method according to one of Claims 1 to 3, **characterized in that** the mobile radio channel impulse responses are estimated by linear or nonlinear prediction from pilot symbols in the two time slots preceding the current time slot.

**9.** Method for deciding on the use of one of the methods according to Claim 1, 5 or 8, with a programmable or adaptively controllable threshold value criterion being used for the decision.

**10.** Method according to one of Claims 1 to 8, **characterized in that** the number of sample values for estimating the delay times and the complex amplitudes, or amplitudes and phases, is programmed as a function of the estimation accuracy to be achieved.

**11.** Method according to Claim 2, **characterized in that** the synchronization channel for slot synchronization is the pSCH channel in the UMTS mobile radio standard.

**12.** Method according to Claim 3, **characterized in that** the second synchronization channel is the sSCH channel in the UMTS mobile radio standard.

**Revendications**

**1.** Procédé d'estimation des réponses impulsionnelles d'un canal de radiocommunication mobile descendant dans un système CDMA comportant un canal de synchronisation commun qui est prévu pour la synchronisation de chaque récepteur de radiocommunication mobile et par l'intermédiaire duquel des séquences sont transmises en continu à une multiplicité de récepteurs de radiocommunication mobile, lesquelles séquences sont connues de chacun des récepteurs de radiocommunication mobile, les séquences transmises comportant des symboles pilotes pour la reconnaissance du canal de synchronisation et les symboles pilotes étant transmis à des positions, connues des récepteurs, à l'intérieur d'un créneau temporel,
    **caractérisé par le fait que**, lors de la recherche et de la reconnaissance du canal de synchronisation, l'évaluation des symboles pilotes, connus des récepteurs de radiocommunication mobile, des séquences ainsi que le cas échéant d'autres symboles et séquences connus dans les récepteurs par des décisions préalables permet d'estimer en commun les retards et les amplitudes complexes des réponses de canal de radiocommunication mobile.

**2.** Procédé selon la revendication 1, **caractérisé par le fait que**, lors de la recherche et de la reconnaissance du canal de synchronisation, on évalue les symboles pilotes pendant une synchronisation de créneau temporel.

**3.** Procédé selon la revendication 1 ou 2, **caractérisé par le fait qu'**on utilise des deuxièmes séquences, qui sont transmises par l'intermédiaire d'un deuxième canal de synchronisation, en plus pour l'estimation des retards et des amplitudes complexes, ou amplitudes et phases, des réponses de canal de radiocommunication mobile.

**4.** Procédé selon l'une des revendications précédentes, **caractérisé par le fait qu'**on estime les réponses impulsionnelles de canal de radiocommunication mobile à chaque fois lors de la réception d'un symbole pilote ou d'une suite de symboles pilotes au début ou à la fin d'un créneau temporel ou à une autre position quelconque dans le créneau temporel.

**5.** Procédé selon l'une des revendications 1 à 3, **caractérisé par le fait qu'**on estime les réponses impulsionnelles de canal de radiocommunication mobile par prédiction ou interpolation d'un symbole pilote, ou d'une suite de symboles pilotes, reçu dans un créneau temporel précédent et d'un symbole pilote ou d'une suite de symboles pilotes d'un créneau temporel actuel.

**6.** Procédé selon la revendication 5, **caractérisé par le fait que**, lors de la prédiction ou de l'interpolation, on utilise d'autres symboles connus par exemple par décision préalable dans le récepteur.

**7.** Procédé selon la revendication 5 ou 6, **caractérisé par le fait qu'**on mémorise temporairement des informations de données et de contrôle qui sont transmises entre le dernier symbole pilote du créneau temporel précédent et le premier symbole pilote du créneau temporel actuel.

**8.** Procédé selon l'une des revendications 1 à 3, **caractérisé par le fait qu'**on estime les réponses impulsionnelles de canal de radiocommunication mobile par prédiction linéaire ou non linéaire de symboles pilotes des deux créneaux temporels précédant le créneau temporel actuel.

**9.** Procédé pour décider de l'utilisation de l'un des procédés selon la revendication 1, 5 ou 8, un critère à valeur de seuil programmable ou réglable par adaptation étant utilisé pour la décision.

10. Procédé selon l'une des revendications 1 à 8, **caractérisé par le fait que** le nombre des valeurs échantillonnées pour l'estimation des retards et des amplitudes complexes, ou amplitudes et phases, est programmé en fonction de la précision à obtenir pour l'estimation.

11. Procédé selon la revendication 2, **caractérisé par le fait que** le canal de synchronisation pour la synchronisation de créneau temporel est le canal pSCH dans le standard de radiocommunication mobile UMTS.

12. Procédé selon la revendication 3, **caractérisé par le fait que** le deuxième canal de synchronisation est le canal sSCH dans le standard de radiocommunication mobile UMTS.

# FIG 1

256 Chips

pSCH | $C_P$ | | $C_P$ | | $C_P$

Slot ... Slot ... Slot

sSCH | $C_S^{i,1}$ | | $C_S^{i,2}$ | | $C_S^{i,16}$

2560 Chips

# FIG 2

| Pilot | TPC | TFCI | Data |

Slots | #1 | #2 | ... | #j | ... | #16 |

Frames | #1 | #2 | ... | #i | ... | #72 |